# EUROPÄISCHE PATENTSCHRIFT

(11) **EP 4 252 155 B1**
(45) Veröffentlichungstag und Bekanntmachung des Hinweises auf die Patenterteilung: **16.09.2026**
(21) Anmeldenummer: 21805454.2
(22) Anmeldetag: 01.11.2021
(51) Int. Cl.: G06N 3/067, G06N 3/048, G06E 3/00

(54) **VERFAHREN ZUR BEREITSTELLUNG EINES KÜNSTLICHEN NEURONALEN NETZES**
METHOD FOR PROVIDING AN ARTIFICIAL NEURAL NETWORK
PROCÉDÉ DE FOURNITURE D'UN RÉSEAU NEURONAL ARTIFICIEL

(30) Priorität: 27.11.2020 DE 102020214907
(43) Veröffentlichungstag der Anmeldung: 04.10.2023
(73) Patentinhaber: VOLKSWAGEN AKTIENGESELLSCHAFT, 38440 Wolfsburg (DE)
(72) Erfinder: KURZ, Heiko Gustav, 30177 Hannover (DE)
(86) Internationale Anmeldenummer: PCT/EP2021/080287
(87) Internationale Veröffentlichungsnummer: WO 2022/111946

(56) Entgegenhaltungen:
- CN-A- 110 309 916
- US-A1- 2020 387 780
- ZHIXING LIN ET AL: "Temporal optical neurons for serial deep learning", ARXIV.ORG, CORNELL UNIVERSITY LIBRARY, 201 OLIN LIBRARY CORNELL UNIVERSITY ITHACA, NY 14853, 4 September 2020 (2020-09-04), XP081756593
- SUI XIUBAO ET AL: "A Review of Optical Neural Networks", IEEE ACCESS, IEEE, USA, vol. 8, 13 April 2020 (2020-04-13), pages 70773 - 70783, XP011785619, DOI: 10.1109/ACCESS.2020.2987333

## Beschreibung

Die vorliegende Erfindung betrifft ein Verfahren zur Bereitstellung eines künstlichen neuronalen Netzes. Ferner bezieht sich die Erfindung auf ein System zu diesem Zweck.

Für den Einsatz von künstlichen neuronalen Netzen bestehen viele Anwendungsmöglichkeiten, in denen es auf eine schnelle Verarbeitung der Informationen ankommt. Beispielsweise für das automatische Fahren ist eine möglichst sichere Umfeldwahrnehmung in Echtzeit von großer Bedeutung. Dabei kann das Umfeld eines Fahrzeuges mit Hilfe von Sensoren, wie Radar, Lidar und Kamera erfasst werden. Häufig kann auch eine ganzheitliche 360°-3D-Erfassung der Umwelt vorgesehen sein, sodass alle statischen und dynamischen Objekte erfasst und klassifiziert werden.

Insbesondere der Kamera kommt in einer redundanten, robusten Umfelderfassung eine tragende Rolle zugute, da dieser Sensortyp präzise in der Umfelderfassung Winkel messen und zur Klassifikation des Umfelds eingesetzt werden kann. Allerdings ist die Verarbeitung und Klassifizierung der Kamerabilder rechenintensiv und architektonisch aufwändig. Insbesondere die 360°-3D-Umfelderfassung ist problematisch, da viele Einzelbilder klassifiziert und prozessiert werden müssen und somit der Rechenaufwand steigt.

Herkömmliche hochperformante, künstliche neuronale Netzwerke (NN oder KNN bezeichnet) bieten die Möglichkeit, Kamerabilder oder Daten anderer Sensoren mit Bildwiederholraten von weniger als 10Hz zu klassifizieren. Für viele Anwendungsfälle, wie bei der sicheren Umfelderfassung in Echtzeit, ist diese Bildwiederholrate häufig ungenügend, denn moderne Kamerasysteme arbeiten mit 30Hz Bildwiederholrate. Darüber hinaus steigt die Datenlast mit zunehmendem Auflösungsvermögen der Kamerabilder.

Aus den Druckschriften "Temporal optical neurons for serial deep learning" von Zhixing Lin et al. (arxiv.org, Cornell University Library, 201 Olin Library Cornell University Ithaca, NY 14853, 4. September 2020), "A Review of Optical Neural Networks" von Sui Xiubao et al. (IEEE access, IEEE, USA, Bd. 8, 13. April 2020, Seiten 70773-70783, XP011785619, DOI: 10.1109/ACCESS.2020.2987333) sowie der CN 110 309 916 A sind künstliche neuronale Netze bekannt.

Der häufig limitierende Faktor ist die Prozessorgeschwindigkeit bzw. GPU-Geschwindigkeit moderner Hochleistungsrechner, welche selbst mit GPU-Beschleunigung nicht ausreichend sein kann, um die Bilder vollständig in Echtzeit zu klassifizieren.

Es ist daher eine Aufgabe der vorliegenden Erfindung, die voranstehend beschriebenen Nachteile zumindest teilweise zu beheben. Es ist insbesondere eine Aufgabe, eine Alternative zu herkömmlichen KNN vorzuschlagen.

Die voranstehende Aufgabe wird gelöst durch ein Verfahren mit den Merkmalen des Anspruchs 1 und durch ein System mit den Merkmalen des Anspruchs 9. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen System, und jeweils umgekehrt, sodass bezüglich der Offenbarung zu den einzelnen Erfindungsaspekten stets wechselseitig Bezug genommen wird bzw. werden kann.

Gegenstand der Erfindung ist ein Verfahren zur Bereitstellung eines künstlichen neuronalen Netzes, insbesondere eines optischen, dispersiven neuronalen Netzwerkes. Hierbei ist insbesondere vorgesehen, dass die nachfolgenden Schritte durchgeführt werden, vorzugsweise nacheinander in der angegebenen Reihenfolge und/oder wiederholt:
- Bereitstellen eines optischen Signals für das Netz, um eine Ausgabe des Netzes durch eine Verarbeitung des optischen Signals durch das Netz zu erhalten, wobei vorzugsweise die Verarbeitung des optischen Signals durch das Netz mittels einer vordefinierten optischen Filterung des Signals erfolgt,
- Verwenden einer Eigenschaft des optischen Signals, wobei die Eigenschaft für eine (spektrale und/oder temporale) Phase des optischen Signals spezifisch sein kann, um für die Verarbeitung zumindest eine Netzkomponente des Netzes bereitzustellen, wobei vorzugsweise die zumindest eine Netzkomponente zumindest ein Neuron und/oder zumindest ein Gewicht des Netzes umfasst, wobei bevorzugt die Verwendung der Eigenschaft dadurch erfolgt, dass die vordefinierte optische Filterung eine vordefinierte Anpassung der Eigenschaft umfasst, um eine lineare Gewichtung und/oder nichtlineare Funktion des Neurons bereitzustellen,
- Bereitstellen mehrerer Neuronen als die zumindest eine Netzkomponente und Verwenden eines Spektralkombinierers des Netzes, um die durch die Verwendung der Eigenschaft erhaltenen Ausgangssignale der Neuronen spektral zu kombinieren.

Auf diese Weise kann eine optische Verarbeitung des Signals ermöglicht werden, und damit gegenüber einer reinen elektronischen Verarbeitung deutliche Geschwindigkeitsvorteile bringen. Die Verarbeitung und insbesondere Filterung kann dabei vordefiniert sein, also der Umfang der Veränderung der Eigenschaft für die Verarbeitung (z. B. im Rahmen einer Trainingsphase) fest bei der Erstellung des Netzes vorgegeben werden. Dies kann z. B. konstruktiv durch die Auswahl und/oder Anpassung von optischen Elementen des Netzes für die Verwendung der Eigenschaft und/oder Filterung des optischen Signals erfolgen.

Das Verwenden der Eigenschaft des optischen Signals, die für die (spektrale und/oder temporale) Phase des optischen Signals spezifisch ist, um das Neuron und/oder das Gewicht bereitzustellen, kann z. B. dadurch erfolgen, dass die Dispersion des optischen Signals während der Propagation in Materie als Neuron und/oder Gewicht verwendet wird. Das wenigstens eine Neuron des künstlichen neuronalen Netzes (kurz als KNN bezeichnet) kann jeweils bspw. als ein optisches und/oder dispersives Neuron und/oder das wenigstens eine Gewicht des KNN kann jeweils als ein optisches und/oder dispersives Gewicht ausgeführt sein. Auf diese Weise ist eine Prozessierung von Informationen (insbesondere Daten) mit Lichtgeschwindigkeit möglich.

Bspw. umfasst das optische Signal ein optisches Eingangssignal, welches in das Netz eingegeben wird. Durch das Eingangssignal können die zu prozessierenden Informationen repräsentiert sein, durch die Verarbeitung des optischen Eingangssignals prozessiert werden, um als ein Ergebnis der Prozessierung die Ausgabe (z. B. in der Form eines optischen Ausgangssignals, also des verarbeiteten optischen Eingangssignals) zu erhalten.

Eine Möglichkeit zur Bereitstellung des optischen Signals ist es, Laserpulse als optisches Signal (d. h. Lichtsignal) zu verwenden. Gleichwohl sind auch alternative Ausführungen des optischen Signals denkbar, wie z. B. als ein kontinuierlicher Laserstrahl oder dergleichen. Die Verarbeitung kann durch eine Veränderung des (spektralen und/oder temporalen) Phasenverlaufs erfolgen, wie nachfolgend noch beispielhaft beschrieben wird. Dabei kann zu diesem Zweck ein optisches, dispersives Element zum Einsatz kommen, das geeignet ist, den (spektralen und/oder temporalen) Phasenverlauf anzupassen. Die Veränderung des (spektralen und/oder temporalen) Phasenverlaufs ermöglicht es, dass die Eigenschaft des optischen Signals, die für die (spektrale und/oder temporale) Phase des optischen Signals spezifisch ist, wie bspw. die (spektrale und/oder temporale) Phase selbst oder deren Ableitung oder deren Fouriertransformierte, als das optische Neuron und/oder als das optische Gewicht verwendet werden kann.

Weiter ist im Rahmen der Erfindung denkbar, dass das Bereitstellen des optischen Signals dadurch erfolgt, dass ein Lichtsignal in wenigstens eine der wenigstens einen Netzkomponente übertragen wird, wobei das Lichtsignal ein Träger einer Information sein kann, welche durch die Verarbeitung des Netzes verarbeitet wird, um als die Ausgabe eine Bewertung, insbesondere Klassifizierung, der Information zu erhalten. Damit kann das optische Signal zunächst als ein Eingabesignal in das Netz eingegeben werden. Auf diese Weise können Informationen in das Netz eingegeben werden, z. B. Sensordaten oder dergleichen. Die Informationen können dabei auch direkt als das Eingabesignal transmittiert werden (z. B. Licht über eine Optik oder LiDAR-Strahlung) und/oder es können die Informationen elektronisch eingelesen und dann auf einem optischen Trägersignal als das Eingabesignal übertragen werden. (LiDAR steht hierbei als Abkürzung für englisch light detection and ranging, und kann z. B. bei einem Fahrzeug zur Erfassung des Umfelds und/oder zur Abstands- und Geschwindigkeitsmessung zum Einsatz kommen.)
Vorteilhafterweise kann bei der Erfindung vorgesehen sein, dass das Verwenden der für die (spektrale und/oder temporale) Phase des optischen Signals spezifischen Eigenschaft dadurch erfolgt, dass ein (spektraler und/oder temporaler) Phasenverlauf des optischen Signals nichtlinear und/oder linear verändert wird, um die Eigenschaft (insbesondere in vordefinierter Weise) zu verändern, insbesondere um eine nichtlineare Funktion des Neurons (wie eine Aktivierungsfunktion) und/oder eine lineare Gewichtung des Gewichts auszuführen. Allgemeiner formuliert erfolgt die Verwendung der Eigenschaft des optischen Signals z. B. durch die Verwendung der (spektralen und/oder temporalen) Phase oder einer davon abhängigen Eigenschaft. Die (für die spektrale und/oder temporale Phase des optischen Signals spezifische) Eigenschaft kann entsprechend die spektrale und/oder temporale Phase selbst oder auch eine Gruppenlaufzeit (engl. Group Delay, kurz GD) oder eine Gruppenlaufzeitdispersion (engl. Group Delay Dispersion, kurz GDD) oder eine Gruppengeschwindigkeitsdispersion (engl. Group Velocity Dispersion, kurz GVD) oder eine Dispersion dritter Ordnung (engl. Third Order Dispersion, kurz TOD) oder einer höheren Ordnung der Ableitung der spektralen Phase sein. Um die Verarbeitung durch das Netz und konkret durch die Netzkomponente durchzuführen, also bspw. eine Gewichtung durch das Gewicht und/oder eine Funktion des Neurons (bspw. eine Aktivierungsfunktion) auszuführen, kann (bspw. durch Einsatz dispersiver Materialien) die vorgenannte Eigenschaft verändert werden. Hierzu kommen z. B. die nachfolgend noch beschriebenen optischen, dispersiven Elemente zum Einsatz, welche konstruktiv zu dem Netz zusammengefügt werden können, um die Verarbeitung bereitzustellen. Bei der Gewichtung erfolgt bspw. eine lineare Änderung der Dispersion und/oder der spektralen und/oder temporalen Phase und/oder der GD und/oder der GDD und/oder der TOD. Auch kann ggf. eine Frequenzmodulation des optischen Signals zur Gewichtung erfolgen. Ferner ist es denkbar, dass zur Ausführung der (nichtlinearen) Funktion des Neurons eine nichtlineare Änderung der Eigenschaft, z. B. der spektralen Phase und/oder der GD und/oder der GDD und/oder der TOD durchgeführt wird. Die Funktion des Neurons kann somit bspw. als eine Aktivierungsfunktion wie eine Heaviside-Funktion oder Sigmoidfunktion oder RELU-Funktion bereitgestellt sein.

Es kann im Rahmen der Erfindung vorgesehen sein, dass die Ausgabe und/oder ein Ausgangssignal der zumindest einen Netzkomponente dadurch ausgewertet wird, dass die für die (spektrale und/oder temporale) Phase des optischen Signals spezifische Eigenschaft des optischen Signals ausgewertet, insbesondere gemessen, wird. Um die Verarbeitung durch mehrere Gewichte und/oder Neuronen durchzuführen, also insbesondere die Netzkomponenten miteinander zu kombinieren (d. h. vorzugsweise miteinander zu koppeln), ist eine kohärente oder inkohärente spektrale Kombination des optischen (Ausgangs-) Signals mehrerer Neuronen vorgesehen, und dass die kombinierten (Ausgangs-) Signale über optische Gewichte an anschließende optische Neuronen der nächsten Schicht weitergeleitet werden. Abschließend kann zur Auswertung der Ausgabe des Netzes die für die (spektrale und/oder temporale) Phase des optischen Signals spezifische Eigenschaft gemessen werden. Am Ausgang des Netzes kann entsprechend der Dispersionsverlauf als gewünschte Ausgabeinformation, bspw. Klasseninformation im Falle einer Klassifizierung, detektiert werden, und die Ausgabe bspw. an eine CPU (Central Processing Unit) oder GPU (graphics processing unit) zur weiteren Verarbeitung wie einer Bildung eines Umfeldsmodells weitergegeben werden.

Das erfindungsgemäße Verfahren kann den Vorteil bereitstellen, dass die Rechengeschwindigkeit für die Verarbeitung durch das KNN erhöht wird, und auch die Erstellung tiefer optischer neuronaler KNN ermöglicht wird. Die Klassifizierung kann dabei mit Lichtgeschwindigkeit erfolgen. Es können ferner gegenüber alternativen Lösungen niedrigere optische Leistungen notwendig sein, um eine nichtlineare Antwortfunktion auszulösen, da keine Mehrphotonenprozesse beteiligt sein müssen oder nur Materialeigenschaften genutzt werden können. Ferner kann eine Ringleitung einfach realisierbar sein. Das gesamte KNN kann in der Form eines optischen neuronalen Netzes (kurz ONN) auf einem Halbleiter physikalisch fertigbar sein. Ferner kann eine Integration des ONN auf einen Halterleiterchip in CMOS, SiN-CMOS, Bi-CMOS, hybrid Bi-CMOS Prozessen auf photonisch-elektronisch kointegrierten Chips möglich sein.

Ferner kann im Rahmen der Erfindung vorgesehen sein, dass das optische Signal in der Form eines optischen Eingangssignals bereitgestellt wird, welches für eine Eingabeinformation spezifisch ist, und durch die zumindest eine Netzkomponente verarbeitet wird, um ein für die Ausgabe spezifisches optisches Ausgangssignal zu erhalten. Das Ausgangssignal kann daher im Gegensatz zum Eingangssignal eine zusätzliche Information über das Eingangssignal umfassen, z. B. eine Klasseninformation einer Klassifizierung.

Von weiterem Vorteil kann vorgesehen sein, dass mehrere Netzkomponenten bereitgestellt werden, welche Neuronen und/oder Gewichte umfassen, welche miteinander in unterschiedlichen Ebenen des Netzes vorgesehen und miteinander optisch verbunden sind. Typischerweise kann sich das Netz aus mehreren Netzkomponenten zusammensetzen, welche entsprechend der Netzstruktur miteinander verbunden sind. Die Netzkomponenten können dabei in unterschiedlichen Ebenen des Netzes vorgesehen sein, und über Verbindungen wie Wellenleiter können die Ausgangssignale der Netzkomponenten einer Ebene an die Netzkomponenten einer nachfolgenden Ebene als Eingangssignal übermittelt werden.

Optional kann es vorgesehen sein, dass die für die (spektrale und/oder temporale) Phase des optischen Signals spezifische Eigenschaft die spektrale und/oder temporale Phase selbst oder eine Gruppenlaufzeit oder eine Gruppenlaufzeitdispersion oder eine Gruppengeschwindigkeitsdispersion oder eine Dispersion dritter Ordnung oder einer höheren Ordnung der Ableitung der spektralen Phase ist. Dies ermöglicht die zuverlässige Verarbeitung und Auswertung des optischen Signals. Es kann ferner möglich sein, dass das Neuron als ein dispersiven Neuron ausgeführt ist, welches die nichtlineare Funktion des Neurons durch eine spektrale Phasenmodulation des optischen Signals bereitstellt.

Gemäß einem weiteren Vorteil kann vorgesehen sein, dass das Netz bei einem Fahrzeug verwendet wird, wobei vorzugsweise das optische Signal in der Form eines optischen Eingangssignals bereitgestellt wird, welches für eine Eingabeinformation über ein Umfeld des Fahrzeuges spezifisch ist, und durch die zumindest eine Netzkomponente verarbeitet wird, um bevorzugt die Ausgabe als eine Klassifizierung der Eingabeinformation zu erhalten. Das Fahrzeug kann z. B. als ein Kraftfahrzeug und/oder Personenkraftfahrzeug (oder Lastkraftfahrzeug) und/oder autonomes Fahrzeug ausgebildet sein. Die Eingabeinformation kann z. B. ein Signal mit den Sensordaten einer Kamera oder dergleichen sein.

Ebenfalls Gegenstand der Erfindung ist ein System zur Bereitstellung eines künstlichen neuronalen Netzes, bevorzugt für ein Fahrzeug, aufweisend:
- eine (insbesondere elektro-optische) Schnittstelle für ein Bereitstellen eines optischen Signals für das Netz, um eine Ausgabe des Netzes durch eine Verarbeitung des optischen Signals durch das Netz zu erhalten,
- wenigstens ein optisches und/oder dispersives Element für ein Verwenden einer Eigenschaft des optischen Signals, welche für eine spektrale und/oder temporale Phase des optischen Signals spezifisch ist, um für die Verarbeitung zumindest eine Netzkomponente des Netzes bereitzustellen.

Hierbei ist vorgesehen, dass die zumindest eine Netzkomponente zumindest ein Neuron und/oder ein Gewicht des Netzes umfasst. Daher kann das erfindungsgemäße Verfahren ein KNN in optischer, dispersiver Weise bereitstellen.

Das erfindungsgemäße System bringt somit die gleichen Vorteile mit sich, wie sie ausführlich mit Bezug auf ein erfindungsgemäßes Verfahren beschrieben worden sind. Zudem kann das System geeignet sein, ein erfindungsgemäßes Verfahren auszuführen.

Es können bei dem erfindungsgemäßen System mehrere der Elemente vorgesehen sein, und konstruktiv zu dem Netz miteinander gekoppelt sein. Bspw. erfolgt hierzu eine Integration der Elemente in einen Halbleiter und/oder eine Kopplung mittels Wellenleiter, um das optische Signal zwischen den Netzkomponenten zu übertragen. Das dispersive Element kann bspw. ein dispersiven Medium aufweisen, um die Verwendung, insbesondere Veränderung, der Eigenschaft des optischen Signals durchzuführen.

Außerdem kann es im Rahmen der Erfindung von Vorteil sein, dass mehrere optische Elemente vorgesehen und jeweils dazu ausgeführt sind, für das Verwenden der Eigenschaft einen spektralen und/oder temporalen Phasenverlauf des optischen Signals zumindest nichtlinear (oder alternativ oder zusätzlich linear) zu verändern, um jeweils ein Ausgangssignal eines Neurons (alternativ oder zusätzlich eines Gewichts) des Netzes bereitzustellen, wobei vorzugsweise wenigstens ein Spektralkombinierer des Netzes vorgesehen ist, um die Ausgangssignale der Neuronen (bzw. Gewichte) spektral zu kombinieren, und bevorzugt ein Spektralphasenanalysator vorgesehen ist, um für die Bereitstellung der Ausgabe eine Phase des kombinierten Ausgangssignals auszuwerten.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen jeweils schematisch:
- Fig. 1: die Verfahrensschritte eines erfindungsgemäßen Verfahrens,
- Fig. 2: ein neuronales Netz,
- Fig. 3: ein Graph einer Sigmoid-Funktion, welche als nichtlineare Funktion eines Neurons verwendet wird,
- Fig. 4: ein elektrisches Feld eines Pulses als Funktion der Zeit,
- Fig. 5: eine elektrischen Feldstärke verschiedener Laserpulse als Funktion der Zeit,
- Fig. 6: eine spektrale Phase des optischen Signals als Funktion der Zeit,
- Fig. 7: ein GD und die spektrale Phase als Funktion der Zeit,
- Fig. 8: ein dispersives Element zu Verwendung als Neuron,
- Fig. 9: eine Visualisierung einer Propagation eines Laserpulses durch ein Quarzglas und der Reflexion durch einen dispersiven Spiegel als dispersives Element,
- Fig. 10: eine Visualisierung eines GD und GDD eines Laserpulses nach Propagation durch ein Quarzglas und der Reflexion durch dispersive, dielektrische Dünnschichten als dispersives Element,
- Fig. 11: ein Verlauf eines Spektrums und der spektralen Phase des optischen Signals bei der Verarbeitung durch das Netz mittels eines dispersiven Elements,
- Fig. 12: Verläufe eines Spektrums und der spektralen Phase des optischen Signals bei der Verarbeitung durch das Netz mittels eines dispersiven Elements,
- Fig. 13: eine beispielhafte Ausbildung eines dispersiven, optischen Netzes,
- Fig. 14: eine beispielhafte Ausführung eines Spektralphasenanalysators, bei welcher zwei zeitverzögerte Pulse in einem nichtlinearen Prozess mit einem zeitlich gestreckten Puls gemischt werden, sodass die frequenzkonvertierten Ausgangspulse spektral geschert sind,
- Fig. 15: ein Flussschema der Datenverarbeitung mittels des optischen Netzes,
- Fig. 16: eine Propagation eines Laserpulses durch Quarzglas und Reflexion durch einen dispersiven Spiegel,
- Fig. 17: eine Propagation eines Laserpulses durch Quarzglas und Reflexion durch verschiedene dispersive Spiegel
- Fig. 18: eine beispielhafte Ausbildung des neuronalen Netzes durch einen Halbleiter.

In den nachfolgenden Figuren werden für die gleichen technischen Merkmale auch von unterschiedlichen Ausführungsbeispielen die identischen Bezugszeichen verwendet.

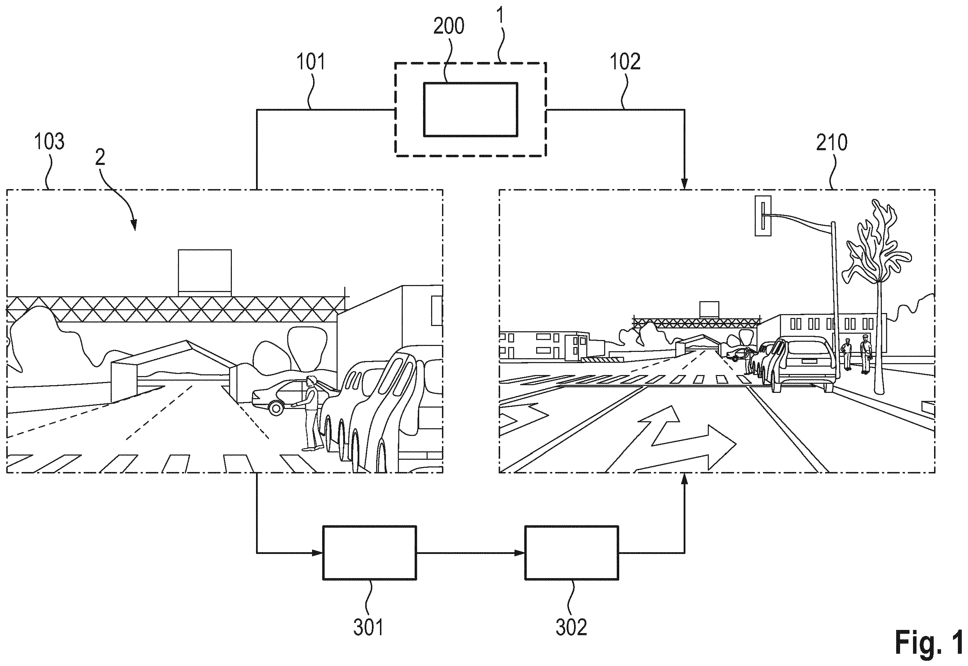

In Figur 1 sind schematisch die Verfahrensschritte eines erfindungsgemäßen Verfahrens zur Bereitstellung eines künstlichen neuronalen Netzes 200 visualisiert. Gemäß einem ersten Verfahrensschritt 301 erfolgt dabei ein Bereitstellen eines optischen Signals 100 (zur Veranschaulichung dargestellt in der Form eines Eingangssignals 101 und eines Ausgangssignals 102) für das Netz 200, um eine Ausgabe 210 des Netzes 200 durch eine Verarbeitung des optischen Signals 100 durch das Netz 200 zu erhalten. Das Eingangssignal 101 kann z. B. anhand Sensordaten 103 wie eines Kamerabildes bereitgestellt werden. Anschließend kann gemäß einem zweiten Verfahrensschritt 302 ein Verwenden einer Eigenschaft des optischen Signals 100 erfolgen, wobei die Eigenschaft für eine spektrale und/oder temporale Phase des optischen Signals 100 spezifisch ist, um für die Verarbeitung zumindest eine Netzkomponente 250 des Netzes 200 bereitzustellen. Wie nachfolgend noch näher beschrieben wird, kann die zumindest eine Netzkomponente 250 ein Neuron 251 und/oder ein Gewicht 252 des Netzes 200 umfassen.

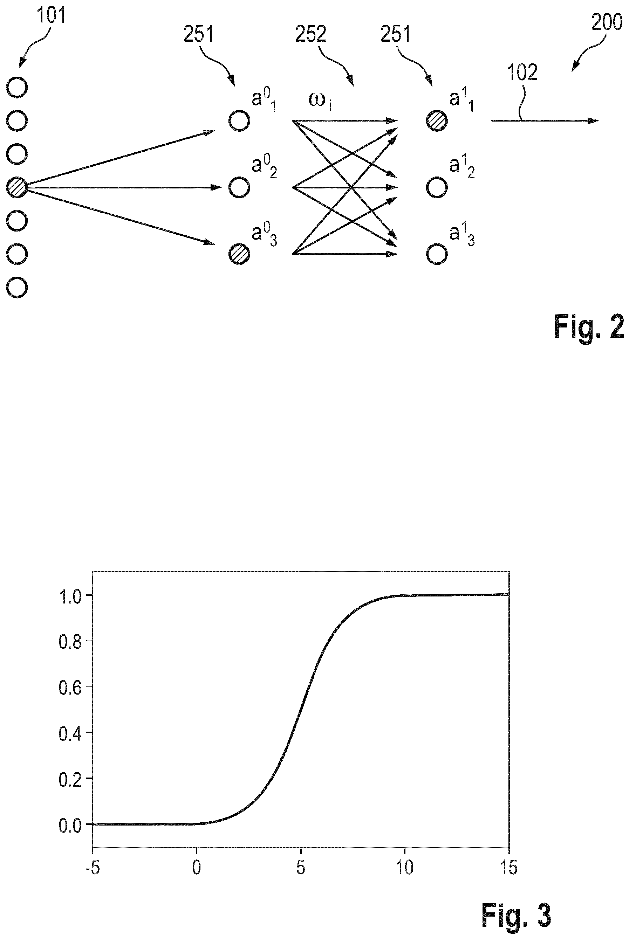

Wie in Figur 1 weiter veranschaulicht ist, kann das KNN 200 bspw. in einer automatischen Fahrfunktionen eines Fahrzeuges 1 zur Klassifizierung des Umfelds 2 des Fahrzeuges 1 verwendet werden. Allgemein formuliert kann es vorgesehen sein, dass das Netz 200 bei einem Fahrzeug 1 verwendet wird, wobei das optische Signal 100 in der Form eines optischen Eingangssignals 101 bereitgestellt wird, welches für eine Eingabeinformation über ein Umfeld 2 des Fahrzeuges 1 spezifisch ist, und durch die zumindest eine Netzkomponenten 250 verarbeitet wird, um die Ausgabe 210 als eine Klassifizierung der Eingabeinformation zu erhalten. Die Eingabeinformation kann bspw. durch eine Kamera des Fahrzeuges 1 ermittelt werden. Dabei können Sensordaten 103, wie ein Kamerabild der Kamera, in das optische Eingangssignal 101 umgewandelt und über eine Gewichtung 252 (engl. "weights") an die Neuronen 251 des KNN 200 weitergegeben werden (schematisch dargestellt in Figur 2). Bei der Verarbeitung durch das KNN 200 werden z. B. den einzelnen Pixeln des Kamerabildes eine Klasse zugeordnet (zum Beispiel zur Unterscheidung von der Fahrbahn von Fahrbahnmarkierungen, auch können Fahrzeuge und Fußgänger oder Vegetation eigene Klassen sein). Die Klassifizierung kann durch die Ausgabe 210 repräsentiert sein. Mittels dieser Klassifizierung kann das Umfeld 2 präzise erfasst werden, und die Ausgabe 210 somit zum Szenenverständnis beitragen, sodass die Fahrfunktion adaptiv handeln kann.

Das Ausgangssignal der Neuronen 251, und somit das weitergegebene Signal an die Neuronen 251 der darauffolgenden Schicht, kann dabei durch eine Sigmoid-Funktion der Summe gewichteter Antwortfunktionen ${a}_{1}^{1} = σ \left(\sum {ω}_{i} {a}_{i}^{0}\right)$ gegeben sein, wobei *ωᵢ* die Gewichte 252, ${a}_{i}^{0}$ die Neuronen 251 und *σ* die Sigmoid-Funktion darstellt (s. Figur 3, in welcher ein beispielhafter Graph einer Sigmoid-Funktion dargestellt ist, welche häufig als nichtlineare Funktion eines Neurons innerhalb eines KNN 200 verwendet wird. Das KNN 200 bildet somit eine Funktion $f \left({a}^{0},…,{a}^{n}\right) = \left({y}_{0},…,{y}_{k}\right)$ mit $k , n ∈ ℕ$, und wobei die Funktionswerte *yᵢ* als Klasseninformation der Ausgabe 210 ausgegeben werden können.

Herkömmlicherweise werden künstliche neuronale Netzwerke auf konventionellen Computerarchitekturen implementiert, welche jedoch den Nachteil der langsamen Prozessierung hoher Datenmengen aufweisen. Dagegen kann durch die optische Ausbildung des KNN 200 ein deutlicher Geschwindigkeitsvorteil erzielt werden, welcher die Verwendung des KNN 200 auch für Fahrfunktionen, bspw. auch des autonomen Fahrens, ermöglicht.

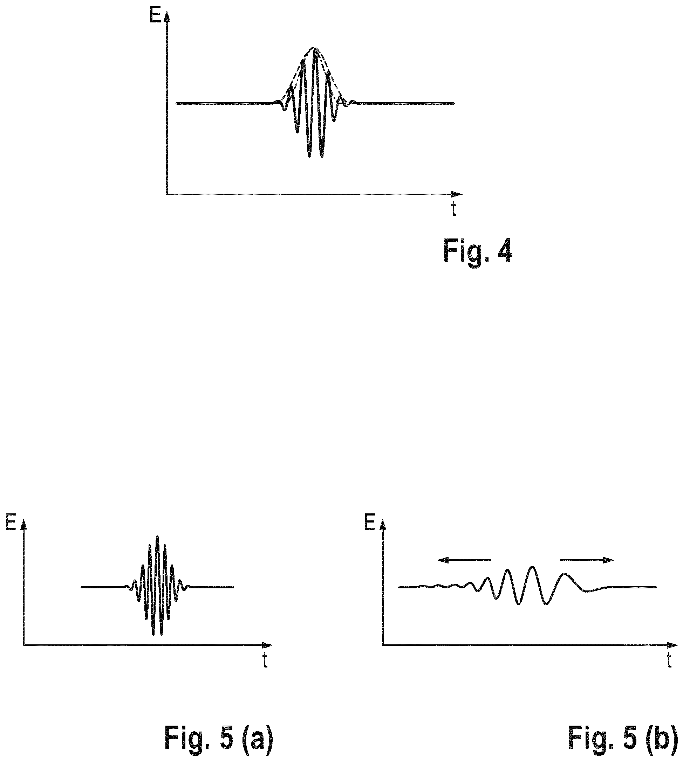

Als optisches Signal 100 kommen z. B. kontinuierliche Laserstrahlen (d. h. Continuous wave, also eine zeitlich konstante abgestrahlte Welle) oder Laserpulse in Frage, welche sich technisch zuverlässig über Wellenleiter 283 an die wenigstens eine Netzkomponente 250 übertragen lassen. Figur 4 zeigt eine schematische Darstellung eines einzelnen Laserpulses als Funktion der Zeit t, worin das elektrische Feld E des Pulses unter der Hüllkurve oszilliert. Der Einzelpuls ist dabei durch seine Zeitdauer τ, die Wellenlänge λ / Frequenz ω und die Amplitude charakterisiert. Die minimal erreichbare zeitliche Dauer eines solchen Pulses ist durch das Zeit-Bandbreite-Produkt definiert: $τ ⋅ Δω = const .$

Gleichung (3) kann entnommen werden, dass der Puls eine spektrale Bandbreite aufweist und demnach eine Superposition von monochromatischen Wellen verschiedener Frequenz ist. Wie in Figur 5 im Diagramm (a) gezeigt ist, schwingt somit nicht bloß eine einzelne Frequenz unter der Einhüllenden, sondern mehrere spektrale Moden.

Die Geschwindigkeit der Bewegung der Einhüllenden wird Gruppengeschwindigkeit υ_{g} genannt (oder auch kurz als GV bezeichnet) und ist über die Ableitung der Wellenzahl k (des Wellenvektors) definiert: $\frac{\partial k}{\partial ω} = \frac{1}{{υ}_{g}} = \frac{1}{c} \left(n\left(ω\right)+ω⋅\frac{\partial n \left(ω\right)}{\partial ω}\right)$

Der Brechungsindex ist dabei durch n(ω) gegeben. Die Ausbreitungsgeschwindigkeit der einzelnen monochromatischen Wellen wird als Phasengeschwindigkeit υₚ bezeichnet: ${υ}_{p} = {c}_{n} = \frac{ω}{{k}_{n}}$ wobei die Wellenzahl mit ${k}_{n} = \frac{2 π ⋅ n \left(ω\right)}{λ} = \frac{ω ⋅ n \left(ω\right)}{c}$ gegeben ist.

Propagiert der Puls dispersionsfrei, so sind υ_{g} und υₚ identisch da $\frac{\partial n \left(ω\right)}{\partial ω} = 0$ gilt (siehe Figur 5 gemäß dem darin gezeigten Diagramm (a)). Innerhalb eines dispersiven Mediums ist dies jedoch nicht der Fall, sodass sich der Verlauf der Einhüllenden ändert (siehe Figur 5 gemäß dem darin gezeigten Diagramm (b)). Gleichungen (4) und (5) kann entnommen werden, dass innerhalb eines normal dispersiven Mediums (n > 1) die roten Spektralkomponenten weniger stark verzögert werden als die blauen Spektralkomponenten, wodurch der Puls zeitlich gestreckt wird (Frequenzchirp).

Durch das Lösen der Helmholtz-Gleichung kann das elektrische Feld eines Laserpulses E(t) als Funktion der Zeit t durch $E \left(t\right) ∝ \frac{1}{2} \sqrt{I \left(t\right)} ⋅ {e}^{{iω}_{0} t} ⋅ {e}^{- iψ \left(t\right)} + c . c .$ beschrieben werden, wobei ω₀ die Trägerfrequenz, ψ(t) die temporale Phase und I(t) die Intensität beschreibt. Für z. B. Gauß-förmige Pulse ist I(t) durch $I \left(t\right) ∝ {\left|{E}_{0}\right|}^{2} ⋅ {e}^{- 2.76 ⋅ t / τ}$ gegeben, mit der Amplitude des elektrischen Feldes E₀ und der Halbwertsbreite des Pulses τ, welche die Pulsdauer definiert. An Gleichungen (7) und (8) wird ersichtlich, dass zur vollständigen Charakterisierung des Pulses nicht nur Amplitude, Frequenz und Pulsdauer ausreichend sind, sondern dass ebenfalls die temporale Phase beachtet werden muss. Um mehr Einsicht in die dispersiven Dynamiken innerhalb des Pulses zu haben, bietet sich eine spektrale Betrachtung des Pulses an.

Durch Fourier-Transformation von E(t) in den Frequenzraum ergibt sich aus Gleichung (7) mit Zentrierung des Pulses um seine Zentralfrequenz (ω - ω₀) → ω: ${E}^{˜} \left(ω\right) ∝ \sqrt{S \left(ω\right)} ⋅ {e}^{{ik}_{n} \left(ω\right) zt} = \sqrt{S \left(ω\right)} ⋅ {e}^{iϕ \left(ω\right) t}$

Darin stellt S(ω) die spektrale Leistungsdichte und ϕ(ω) die spektrale Phase dar, welche durch $ϕ \left(ω\right) = {k}_{n} \left(ω\right) ⋅ z = \frac{n \left(ω\right) ⋅ ω ⋅ z}{c} = - Im \left\{ln\left[{E}^{˜}\left(ω\right)\right]\right\}$ ausgedrückt werden kann. Die spektrale Phase definiert die Phasenbeziehung der einzelnen monochromatischen Wellen unter der Einhüllenden.

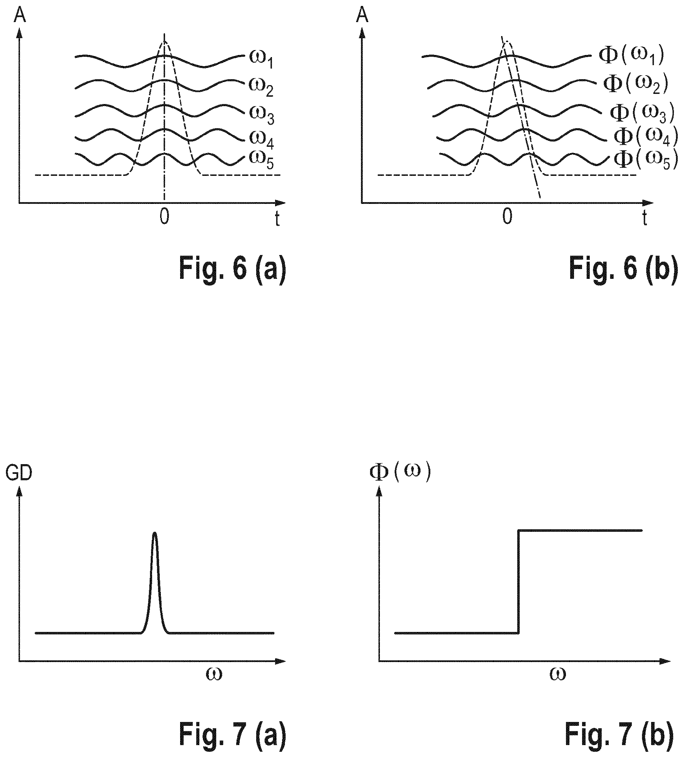

In Figur 6 sind in Darstellung (a) schematisch verschiedene oszillierende Frequenzen ωᵢ gezeigt, welche in Phase unter der Einhüllenden des Pulses schwingen. Gemäß Darstellung (b) werden die Maxima der einzelnen Frequenzen phasenverschoben. Dargestellt ist jeweils die spektrale Phase als Funktion der Zeit t. Alle Spektralkomponenten sind in Phase für ϕ(ω) = 0, sodass konstruktive Interferenz stattfindet und der Puls ein scharfes Maximum bei t = 0 ausbildet. Eine lineare Phasenbeziehung ϕ(ω) = *a*ω korrespondiert hingegen mit einem zeitlichen Versatz, so dass kein Intensitätsmaximum bei t = 0 ausgebildet wird (siehe Figur 6 (b)).

An Gleichungen (9) und (10) wird deutlich, dass Dispersion durch den Brechungsindex wesentlichen Einfluss auf die spektrale Phase und somit den zeitlichen Intensitätsverlauf des Pulses hat. Allerdings kann der Puls durch Messung des Spektrums und der spektralen Phase vollständig charakterisiert werden. Dabei haben die Ableitungen der spektralen Phase, wie Group Delay (GD): $GD = \frac{\partial ϕ}{\partial ω} = \frac{\partial }{\partial ω} \left[\frac{ω ⋅ n}{c}⋅z\right] = z ⋅ \frac{\partial {k}_{n}}{\partial ω} = \frac{z}{{υ}_{g}} ,$ Group Delay Dispersion (GDD): $GDD = \frac{{\partial }^{2} ϕ}{\partial {ω}^{2}} = z ⋅ \frac{{\partial }^{2} {k}_{n}}{\partial {ω}^{2}} ,$ Third Order Dispersion (TOD): $TOD = \frac{{\partial }^{3} ϕ}{\partial {ω}^{3}} = z ⋅ \frac{{\partial }^{3} {k}_{n}}{\partial {ω}^{3}} ,$ und dergleichen großen Einfluss auf die Pulsdynamik und sind messtechnisch erfassbare Größen, um die Wechselwirkung von Laserpulsen mit Materie zu beschreiben. Während der Propagation eines Laserpulses durch Materie kann die Dispersion durch die Akkumulation einer spektralen Phase beschrieben werden. So lassen sich kurze Pulse durch Akkumulation eines spektralen Phasenverlaufs zeitlich chirpen. Umgekehrt können aber auch durch das Aufsammeln eines negativen Phasenbeitrags gechirpte Pulse zeitlich komprimiert werden.

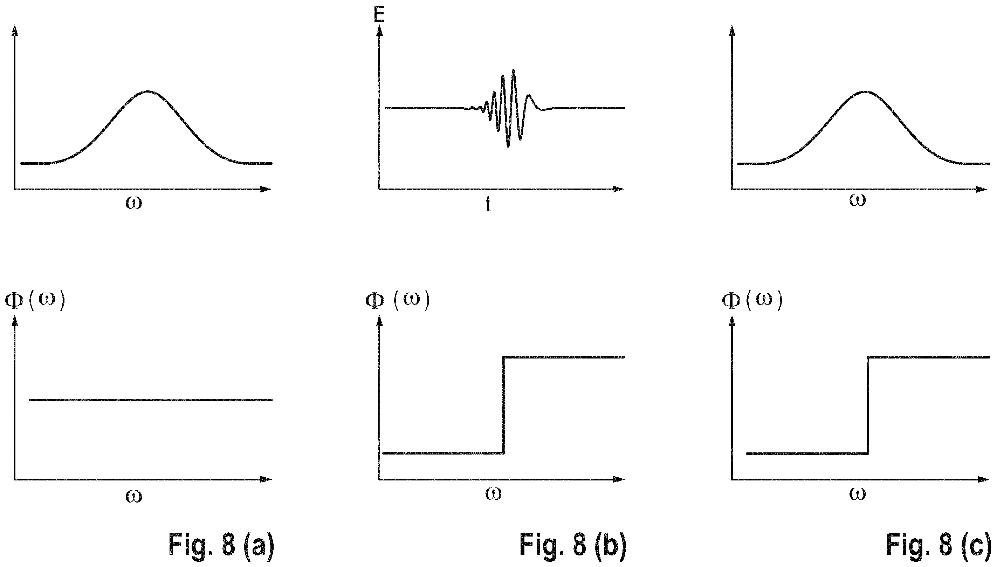

Nachfolgend soll beispielhaft eine Möglichkeit beschrieben werden, um die spektrale Phase ϕ(*ω*) als Neuron 251 für das KNN 200 zu verwenden. Für künstliche Neuronen 251 ist die nichtlineare Antwortfunktion essentiell. Oft wird dabei in konventionellen KNNs die Sigmoid-Funktion verwendet (siehe Figur 3). Der spektrale Phasenverlauf eines optischen Lichtsignals, wie z. B. eines Laserpulses, kann in gleicher Art und Weise moduliert werden, um einen nichtlinearen Phasenverlauf abzubilden. Figur 7 stellt gemäß Darstellung (a) schematisch und beispielhaft den Verlauf des GD in Form einer Delta-Funktion dar. Durch Integration der GD verläuft die spektrale Phase in Form einer Heaviside-Funktion, was wünschenswert für den Einsatz als optisches Neuron 251 sein kann (siehe Figur 8 gemäß Darstellung (b)).

Effekte der spektralen Licht-Materie-Wechselwirkung, wie Propagation von Laserpulsen in dispersiven Medien, bieten die Möglichkeit, eine einfallende Lichtwelle in ihrer spektralen Phase nichtlinear zu modulieren, vergleichbar mit der nichtlinearen Modulation des elektrischen Stroms durch ein künstliches Neuron. Dabei kann ein dispersives Material als optisches Neuron 251 wirken, welches eine nichtlineare Phaseninformation ausgibt. Figur 8 stellt die Funktionsweise eines dispersiven Neurons 251 dar. Ein einfallendes Lichtsignal weist einen flachen Phasenverlauf auf (Figur 8 (a)). Während der Wechselwirkung mit einem dispersiven Element sammelt der Puls eine spektrale Phase auf (s. Figur 8 (b)). Das resultierende Ausgangspektrum ist identisch mit dem Eingangsspektrum, jedoch weist die spektrale Phase einen nichtlinearen Verlauf auf (Figur 8 (c)).

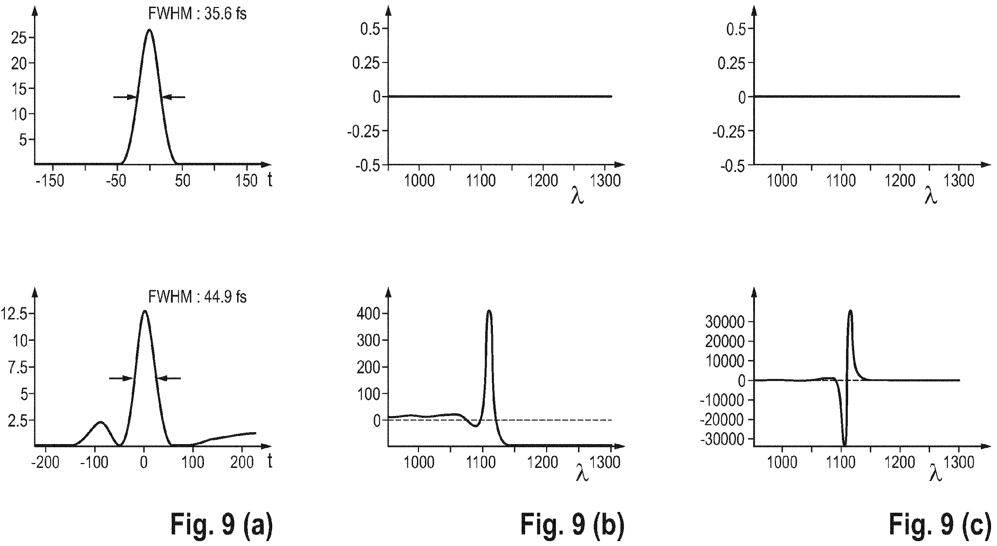

Figur 9 zeigt eine Simulation der Propagation eines Laserpulses vor und nach Propagation durch 3mm Quarzglas und anschließende Wechselwirkung mit einer dielektrischen, dispersiven Schicht, wie z. B. einem gechirpten Spiegel. Der zeitliche Intensitätsverlauf wird durch die Licht-Materie-Wechselwirkung verändert (siehe Figur 9 (a)). Der spektrale Verlauf der GD weist jedoch den gewünschten Verlauf einer Delta-Funktion auf, was einem Heaviside-förmigem Verlauf der spektralen Phase entspricht (vgl. Figur 7). Durch Auslesen der spektralen Phase kann diese Information somit als Neuron 251 dienen. Alternativ kann direkt der GD, die GDD, die TOD oder höhere Ordnungen der Dispersion als Neuron verwendet werden. In Figur 9 (a) ist der Verlauf des Pulses über die Zeit t, in Figur 9 (b) der Verlauf der GD und in Figur 9 (c) der Verauf der GDD jeweils über die Wellenlänge *λ* dargestellt.

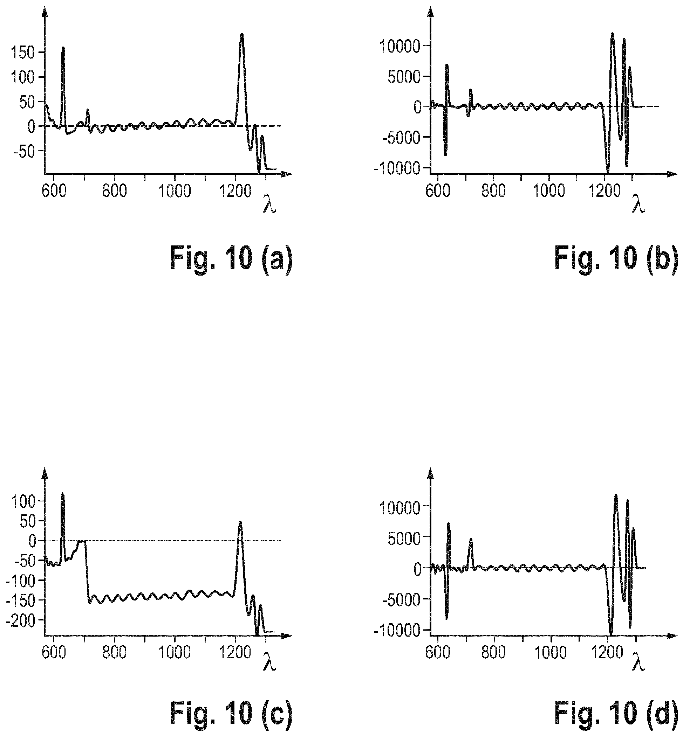

Figur 10 zeigt gemäß Darstellung (a) und (c) die Simulation des GD und gemäß Darstellung (b) und (d) der GDD eines Laserpulses nach Propagation durch 3mm Quarzglas und anschließende Reflexion durch dispersive, dielektrische Dünnschichten. Der Verlauf der GD als Funktion der Wellenlänge weist geringfügige Oszillationen auf. Durch Optimierung der dielektrischen, dispersiven Schichten können diese Oszillationen verringert werden. Das Einfügen einer speziellen dielektrischen Schicht führt dazu, dass der Puls mehr spektrale Phase aufsammelt und folglich die GD im Spektralbereich von 700nm bis 1100nm linear auf -150fs herabgesetzt wird. Die Wechselwirkung mit diesen Schichten wirkt daher wie eine Subtraktion des absoluten Wertes der GD und entspricht einer linearen Änderung der spektralen Phase. Somit können Operationen wie Addition, Subtraktion, Multiplikation und Division mittels dispersiver Elemente 230 durchgeführt werden und ermöglichen den Einsatz dieser Elemente 230 als Gewichte 252 für KNNs.

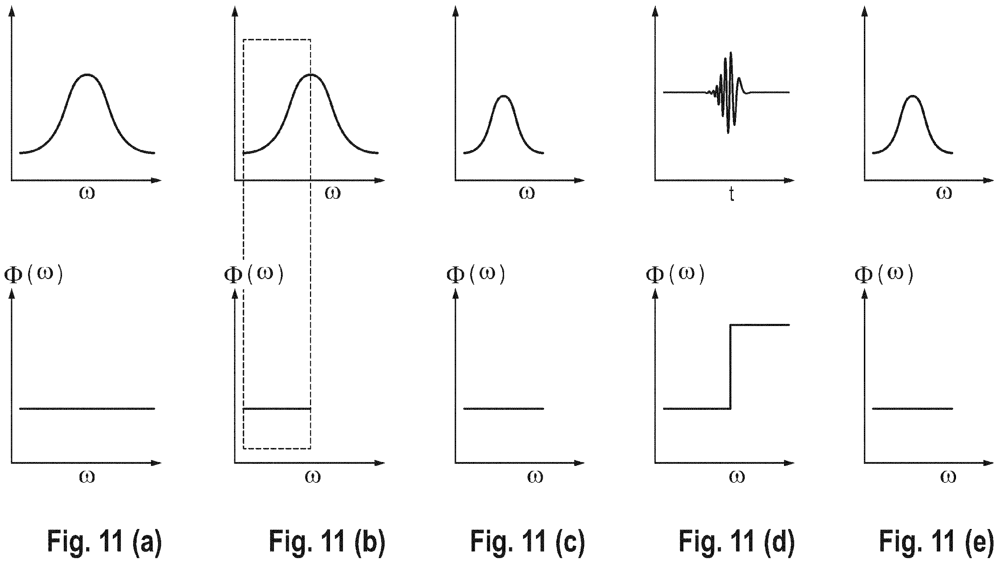

Figur 11 stellt die lineare Modulation der spektralen Phase schematisch dar. Darin wird ein spektraler Filter verwendet, um die spektrale Bandbreite des Eingangssignals zu reduzieren. Das resultierende Spektrum nach Filterung weist eine geringere Bandbreite auf. Diese Modulation entspricht einer Subtraktionsoperation und beeinflusst die anschließende Wechselwirkung mit einem dispersiven Neuron 251, sodass die nichtlineare Antwort des Neurons 251 nicht ausgelöst wird und der Phasenverlauf am Ausgang linear ist. Darstellung (a) in Figur 11 gibt dabei das Eingangsspektrum an, welches mit einem spektralen Filter gemäß Darstellung (b) wechselwirkt, wobei die spektrale Bandbreite, aber nicht der spektrale Phasenverlauf verändert wird (Darstellung (c)). Nach der Wechselwirkung mit einem dispersiven Element 230 (Darstellung (d)) wird die spektrale Phase linear moduliert, was einer Gewichtung entspricht. Darstellung (e) zeigt das resultierende Spektrum bzw. die resultierende Phase.

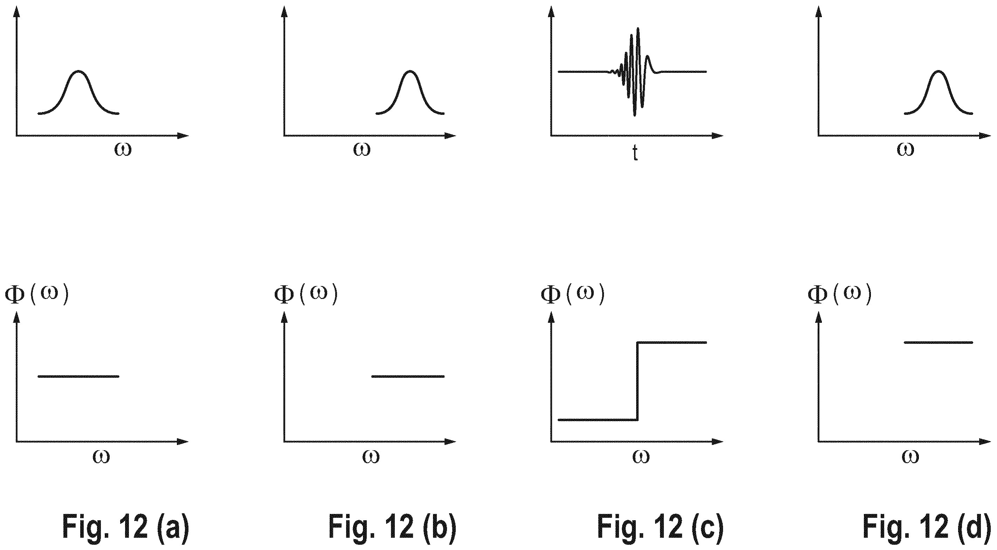

Figur 12 stellt analog zu Figur 11 eine optische Gewichtung mittels einer Frequenzverschiebung dar. Durch spektrale Verschiebung des Eingangsspektrums und anschließende Wechselwirkung mit einem dispersiven Element 230 wird die spektrale Phase mit einem konstanten Faktor multipliziert.

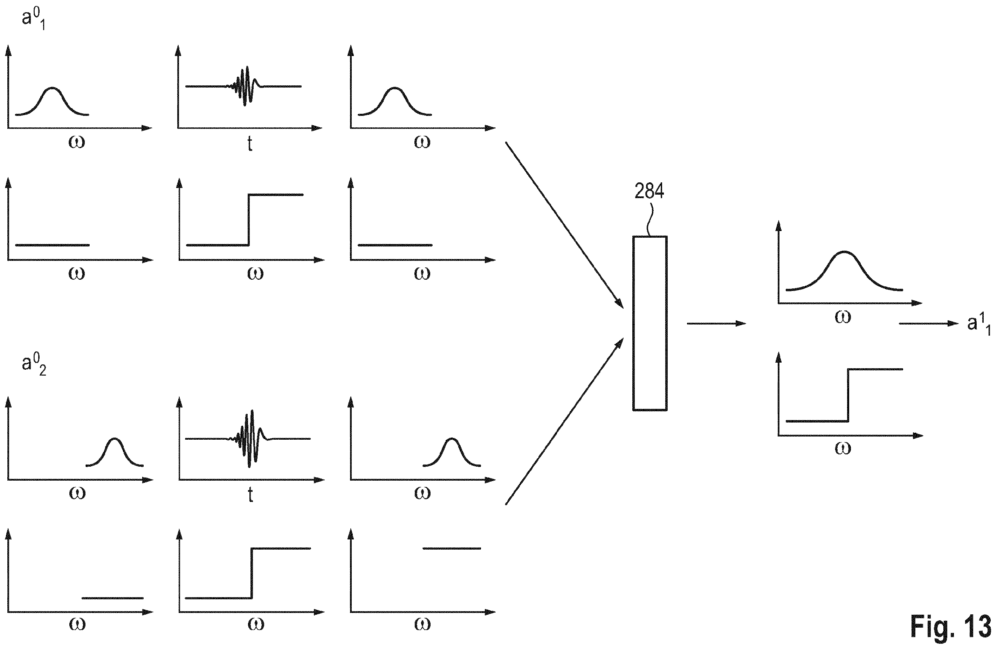

Um ein KNN 200 zu bilden, muss das optische Signal 100 der einzelnen Neuronen 251 über eine Gewichtung 252 an alle Neuronen 251 der nächsten Schicht weitergeleitet werden. Eine Möglichkeit, um die Ausgangssignale der Neuronen 251 spektral zusammenzufügen, bilden optische Spektralkombinierer 284, insbesondere Phasenkombinierer 284. Als solches Bauteil können z. B. optische Gitter und/oder Prismensequenzen und/oder dielektrische Schichten und/oder optisch nichtlineare Medien und/oder Polarisationsoptiken oder ähnliches dienen. Dabei kann die spektrale Phase kohärent oder inkohärent kombiniert werden. Figur 13 stellt schematisch die spektrale Kombination zweier Neuronen 251 dar. Das Ausgangssignal der einzelnen optischen Neuronen aⁿₘ wird mittels eines optischen Bauteils spektral zusammengeführt. Als Ausgangssignal des spektralen Kombinierers liegt der Verlauf der spektralen Phase als Funktion der Frequenz beider Einzelneuronen 251 vor und kann an das nächste Neuron 251 über ein Gewicht 252 weitergeleitet werden. Somit wird ein dispersives optisches neuronales Netzwerk (dONN) geformt.

Um eine Klassifizierung durchzuführen, kann es erforderlich sein, dass die spektrale Phase oder deren Ableitungen vermessen werden. Hierfür stehen diverse etablierte Methoden zur Verfügung.

Bspw. kann mittels spektraler Interferometrie durch die Verwendung eines Spektrometers das Interferenzsignal zweier optischer Pulse vermessen werden, wobei einer der beiden Pulse um eine Zeit *τ* verzögert ist und die spektrale Phase des Pulses bekannt ist. Das kombinierte Signal beider Pulse am Spektrometer kann durch ${E}^{˜} \left(ω\right) = {{E}^{˜}}_{1} \left(ω\right) + {{E}^{˜}}_{2} \left(ω\right) {e}^{- iωτ}$ beschrieben werden. Für den oszillierenden Term ergibt sich die Phasenbeziehung $ϕ \left(ω\right) = ωτ + {ϕ}_{1} \left(ω\right) - {ϕ}_{2} \left(ω\right) .$

Mit bekannter spektraler Phase des Referenzpulses kann die spektrale Phase aus dem spektralen Interferogramm rekonstruiert werden und somit das Spektrometer für einen Spektralphasenanalysator 285 verwendet werden.

Gemäß einer weiteren Möglichkeit kann ein Heterodyn-Detektor zur Charakterisierung der spektralen Phase als Spektralphasenanalysator 285 eingesetzt werden.

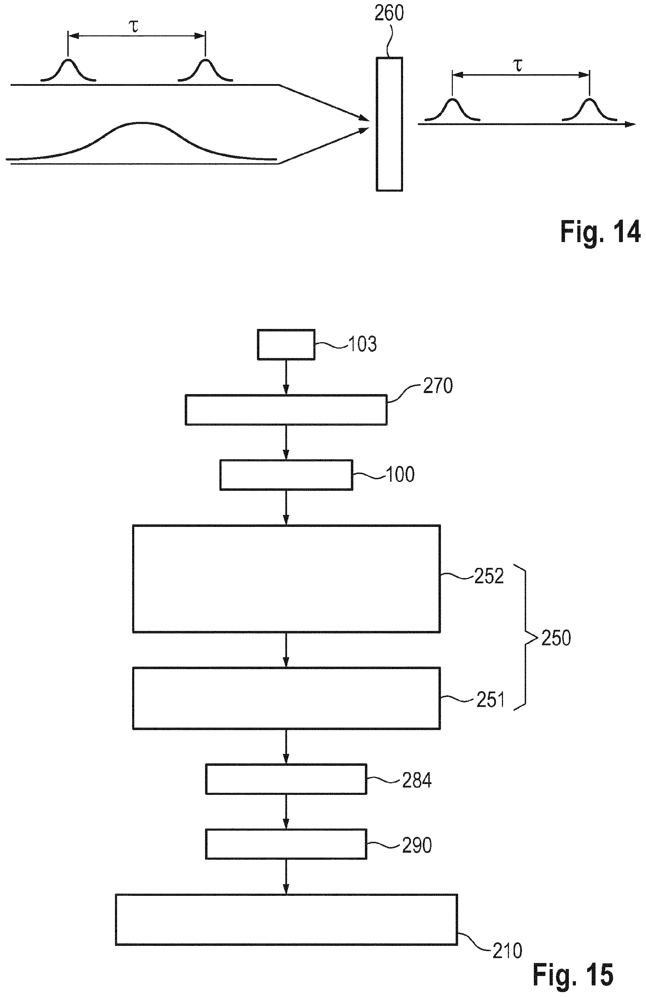

Eine weitere Möglichkeit ist der Einsatz einer spektralen Scherung durch einen Spektralphasenanalysator 285. Dabei werden zwei zeitverzögerte Pulse mit einem gechirpten Replikapuls in einem nichtlinearen Kristall 260 des Spektralphasenanalysators 285 überlagert (siehe Figur 14). Durch Frequenzkonversion im Kristall 260 erfahren die zeitverzögerten Pulse eine spektrale Scherung. Aus dem spektralen Interferogramm kann direkt die GD extrahiert werden: $GD = ϕ \left(ω+Ω\right) - ϕ \left(ω\right)$ mit der spektralen Scherung Ω, welche proportional zur Zeitverzögerung der Pulse *τ* ist. Die spektrale Phase ergibt sich zu: $ϕ \left(ω\right) \approx \frac{1}{Ω} \int GD dω$

In einem FROG-Aufbau eines Spektralphasenanalysators 285 können zwei gegeneinander zeitverzögerte Pulse in einem nichtlinearen Kristall 260 überlagert werden. Die dabei neu erzeugten Frequenzen werden mittels eines Spektrometers des Spektralphasenanalysators 285 aufgezeichnet. Das Interferogramm ergibt sich als Funktion der Frequenz und der Zeitverzögerung beider fundamentaler Pulse und die spektrale Phase kann rekonstruiert werden.

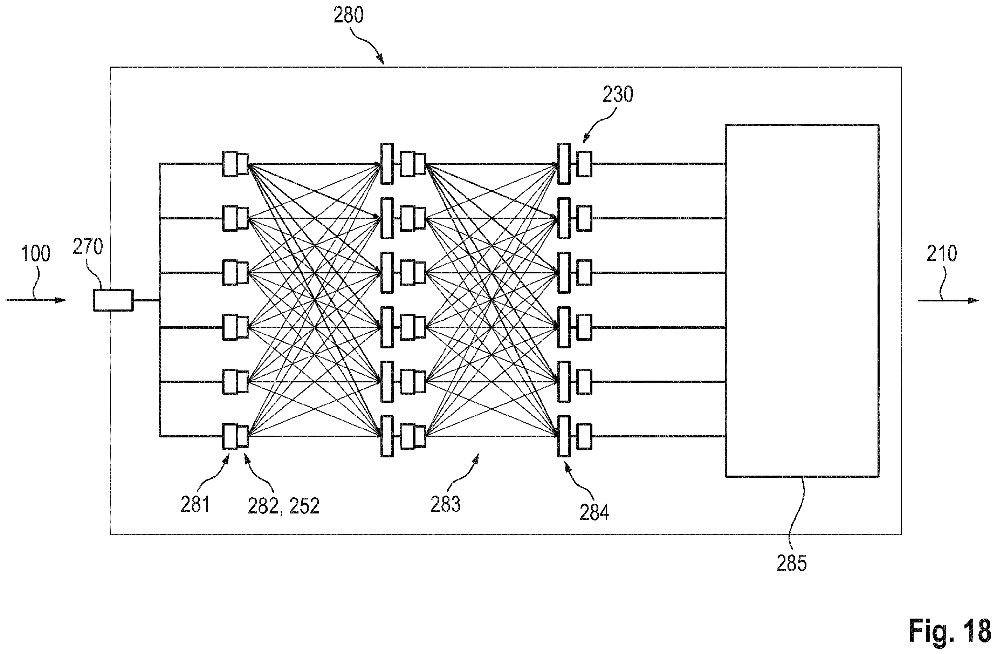

Ein vollständiges dONN kann bspw. durch ein Zusammenfügen wenigstens eines der oben beschriebenen Elemente 230 umgesetzt werden. Beispielhaft ist dies in Figur 15 visualisiert. Es kommt hierbei vorteilhafterweise als das wenigstens eine Element 230 ein dispersives Element 230 zur Ausbildung eines optischen Neurons 251 durch spektrale Phasenmodulation in Frage. Auch kann als das wenigstens eine Element 230 zur Ausbildung eines optischen Gewichts 252 ein Element 230 zur Bereitstellung einer linearen Modulation der spektralen Phase verwendet werden. Weiter kann das wenigstens eine Element 230 einen Spektralkombinierer 284 umfassen, welcher dazu ausgeführt ist, eine kohärente oder inkohärente spektrale Kombination des Signals der dispersiven Neuronen durchzuführen. Ferner kann das wenigstens eine Element 230 einen Spektralphasenanalysator 285 umfassen, also ein Element 230 zur Messung des spektralen Phasenverlaufs. In Figur 15 ist ferner dargestellt, dass die elektro-optische Datenverarbeitung durch eine Schnittstelle 270 ermöglicht wird, um die Sensordaten 103 in das optische Signal 100 umzuwandeln. Dabei können die Sensordaten 103 z. B. auf einem optischen Träger über (in Figur 18 dargestellte) Wellenleiter 283 an die Netzkomponenten 250 unterschiedlicher Ebenen 290 übertragen werden.

Nachfolgend werden weitere Ausführungen von, insbesondere optischen, Elementen 230 zur Bereitstellung der Netzkomponenten 250 beschrieben. So kann mittels eines elektro-optischen Modulators als das Element 230, wie z. B. eines Mach-Zehnder-Modulators (MZM), eine temporale Phase auf den Puls aufgeprägt werden. Diese ist äquivalent zu einer spektralen Phase im Frequenzraum. Somit können optische Gewichte 252 durch lineare Modulation mittels des MZM und optische Neuronen 251 durch nichtlineare Modulation des MZM synthetisiert werden.

Ferner kann es möglich sein, dass sogenannte Pulseshaper als das Element 230 eingesetzt werden, welche auf Basis von LCDs oder elektronischer Brechungsindexänderung eine temporale Phase aufprägen können.

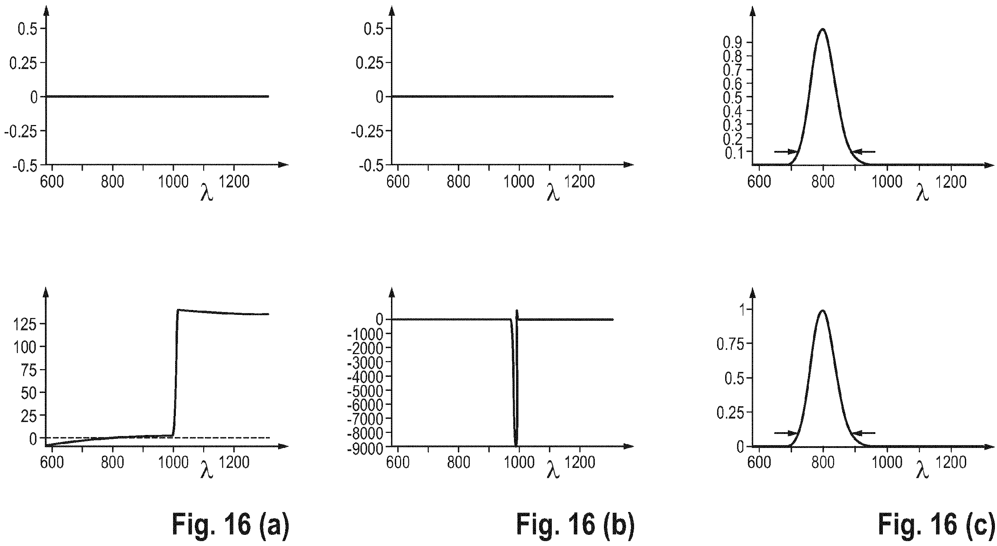

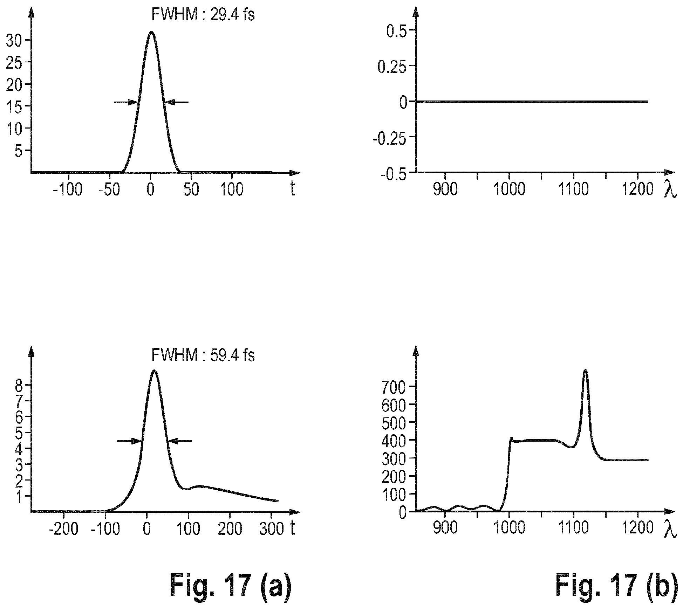

Eine weitere Möglichkeit zur Bereitstellung einer Netzkomponente 250 ist die Nutzung des GD als Antwortfunktion des Neurons (siehe Figur 16, wobei gemäß Darstellung (a) GD vor und nach der Propagation dargestellt ist und gemäß Darstellung (b) GDD vor und nach der Propagation dargestellt ist, Darstellung (c) zeigt die spektrale Leistungsdichte) und Gewicht (siehe Figur 17, wobei gemäß Darstellung (a) der zeitliche Intensitätsverlauf vor und nach der Propagation und gemäß Darstellung (b) GD vor und nach Propagation dargestellt ist).

Auch ist es zur Bereitstellung einer Netzkomponente 250 möglich, die GDD als nichtlineare Funktion des Neurons 251 und Gewichts 252 zu nutzen oder höherer Ordnungen der Dispersion, wie TOD oder dergleichen zu nutzen.

Eine weitere Möglichkeit zur Bereitstellung einer Netzkomponente 250 ist es, einen intensiven Puls geringer Bandbreite in ein optisch nichtlineares Medium als das Element 230 zu fokussieren. Durch Selbstphasenmodulation (SPM) kann der Puls eine Vergrößerung der spektralen Bandbreite erfahren und wird in das optische Neuron 251 weitergeleitet. Durch die erhöhte Bandbreite erfährt die spektrale Phase eine nichtlineare Modulation. Die SPM dient dabei bspw. als optisches Gewicht. Umgekehrt können spektrale Filter das Auslösen des Neurons verhindern.

Ferner ist die Integration der oben beschriebenen Komponenten auf einem Halbleiter 280, insbesondere einem elektronisch-photonisch kointegriertem Chip in CMOS, bi-CMOS, bybrid bi-CMOS, Si-N CMOS Prozess oder ähnlichem denkbar, um die wenigstens eine Netzkomponente 250 bzw. das Netz 200 bereitzustellen. In Figur 18 ist beispielhaft gezeigt, dass das optische Signal 100 über eine Schnittstelle 270 optisch in das Netz 200 eingekoppelt werden kann. Es können ferner dispersive Schichten 281 vorgesehen sein, in denen die Netzkomponenten 250 vorgesehen sind. Bspw. kann zur Gewichtung 252 ein linearer Frequenzmodulator 282 verwendet werden. Ferner können Phasenkombinierer 284 eingesetzt werden, um die Netzkomponenten 250 unterschiedlicher Schichten 281 miteinander zu verbinden. Ein Spektralphasenanalysator 285 kann anschließend anhand der Ausgangssignale der Netzkomponenten 250 die Ausgabe 210 bereitstellen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Fahrzeug
- 2: Umfeld
- 100: optisches Signal
- 101: Eingangssignal
- 102: Ausgangssignal
- 103: Sensordaten

- 200: künstliches neuronales Netz, KNN
- 210: Ausgabe

- 230: Element

- 250: Netzkomponente
- 251: Neuron
- 252: Gewicht, Gewichtung

- 260: Kristall
- 270: Schnittstelle

- 280: Halbleiter
- 281: dispersive Schicht
- 282: linearer Frequenzmodulator
- 283: Wellenleiter
- 284: Spektralkombinierer, Phasenkombinierer, Gitter
- 285: Spektralphasenanalysator
- 290: Ebene

- 301: erster Verfahrensschritt
- 302: zweiter Verfahrensschritt

## Patentansprüche

1. Verfahren zur Bereitstellung eines künstlichen neuronalen Netzes (200), wobei die nachfolgenden Schritte durchgeführt werden:
- Bereitstellen eines optischen Signals (100) für das Netz (200), um eine Ausgabe (210) des Netzes (200) durch eine Verarbeitung des optischen Signals (100) durch das Netz (200) zu erhalten,
- Verwenden einer Eigenschaft des optischen Signals (100), welche für eine spektrale und/oder temporale Phase des optischen Signals (100) spezifisch ist, um für die Verarbeitung zumindest eine Netzkomponente (250) des Netzes (200) bereitzustellen, wobei die zumindest eine Netzkomponente (250) zumindest ein Neuron (251) und/oder ein Gewicht (252) des Netzes (200) umfasst,
- Bereitstellen mehrerer Neuronen (251) als die zumindest eine Netzkomponente (250),
**gekennzeichnet durch**
- Verwenden eines optischen Spektralkombinierers (284) des Netzes (200), um die durch die Verwendung der Eigenschaft erhaltenen Ausgangssignale der Neuronen (251) spektral kohärent oder inkohärent zu kombinieren, um die Verarbeitung mehrerer Gewichte und/oder Neuronen durchzuführen,
wobei der Spektralkombinierer (284) als optisches Gitter und/oder Prismensequenz und/oder dielektrische Schicht und/oder nichtlineares Medium und/oder Polarisationsoptik ausgebildet ist und das Ausgangssignal des spektralen Kombinierers (284) als Verlauf der spektralen Phase als Funktion der Frequenz der Neuronen (251) vorliegt, welches an das nächste Neuron (251) weitergeleitet werden kann.

2. Verfahren nach Anspruch 1,
**dadurch gekennzeichnet,**
**dass** das Bereitstellen des optischen Signals (100) dadurch erfolgt, dass ein Lichtsignal in die Netzkomponente (250) übertragen wird, wobei das Lichtsignal ein Träger einer Information ist, welche durch die Verarbeitung des Netzes (200) verarbeitet wird, um als die Ausgabe (210) eine Bewertung, insbesondere Klassifizierung, der Information zu erhalten.

3. Verfahren nach Anspruch 1 oder 2,
**dadurch gekennzeichnet,**
**dass** das Verwenden der für die Phase des optischen Signals (100) spezifischen Eigenschaft dadurch erfolgt, dass ein spektraler Phasenverlauf des optischen Signals (100) nichtlinear und linear verändert wird, um die Eigenschaft zu verändern, um eine nichtlineare Funktion des Neurons (251) und eine lineare Gewichtung des Gewichts (252) auszuführen.

4. Verfahren nach einem der vorhergehenden Ansprüche,
**dadurch gekennzeichnet,**
**dass** die Ausgabe (210) und/oder ein Ausgangssignal (102) der zumindest einen Netzkomponente (250) dadurch ausgewertet wird, dass die für die Phase des optischen Signals (100) spezifische Eigenschaft des optischen Signals (100) ausgewertet, insbesondere gemessen, wird.

5. Verfahren nach einem der vorhergehenden Ansprüche,
**dadurch gekennzeichnet,**
**dass** das optische Signal (100) in der Form eines optischen Eingangssignals (101) bereitgestellt wird, welches für eine Eingabeinformation spezifisch ist, und durch die zumindest eine Netzkomponente (250) verarbeitet wird, um ein für die Ausgabe (210) spezifisches optisches Ausgangssignal (102) zu erhalten.

6. Verfahren nach einem der vorhergehenden Ansprüche,
**dadurch gekennzeichnet,**
**dass** mehrere Netzkomponenten (250) bereitgestellt werden, welche Neuronen (251) und/oder Gewichte (252) umfassen, welche miteinander in unterschiedlichen Ebenen (290) des Netzes (200) vorgesehen und miteinander optisch verbunden sind.

7. Verfahren nach einem der vorhergehenden Ansprüche,
**dadurch gekennzeichnet,**
**dass** die für die Phase des optischen Signals (100) spezifische Eigenschaft die spektrale und/oder temporale Phase selbst oder eine Gruppenlaufzeit oder eine Gruppenlaufzeitdispersion oder eine Gruppengeschwindigkeitsdispersion oder eine Dispersion dritter Ordnung oder einer höheren Ordnung der Ableitung der spektralen Phase ist.

8. Verfahren nach einem der vorhergehenden Ansprüche,
**dadurch gekennzeichnet,**
**dass** das Netz (200) bei einem Fahrzeug (1) verwendet wird, wobei das optische Signal (100) in der Form eines optischen Eingangssignals (101) bereitgestellt wird, welches für eine Eingabeinformation über ein Umfeld (2) des Fahrzeuges (1) spezifisch ist, und durch die zumindest eine Netzkomponente (250) verarbeitet wird, um die Ausgabe (210) als eine Klassifizierung der Eingabeinformation zu erhalten.

9. System zur Bereitstellung eines künstlichen neuronalen Netzes (200), aufweisend:
- eine Schnittstelle (270) für ein Bereitstellen eines optischen Signals (100) für das Netz (200), um eine Ausgabe (210) des Netzes (200) durch eine Verarbeitung des optischen Signals (100) durch das Netz (200) zu erhalten,
- wenigstens ein optisches Element (230) für ein Verwenden einer Eigenschaft des optischen Signals (100), welche für eine spektrale und/oder temporale Phase des optischen Signals (100) spezifisch ist, um für die Verarbeitung zumindest eine Netzkomponente (250) des Netzes (200) bereitzustellen, wobei die zumindest eine Netzkomponente (250) zumindest ein Neuron (251) und/oder ein Gewicht (252) des Netzes (200) umfasst, wobei mehrere optische Elemente (230) vorgesehen und jeweils dazu ausgeführt sind, für das Verwenden der Eigenschaft einen spektralen Phasenverlauf des optischen Signals (100) zumindest nichtlinear zu verändern, um jeweils ein Ausgangssignal (102) eines Neurons (251) des Netzes (200) bereitzustellen, wobei wenigstens ein Spektralkombinierer (284) des Netzes (200) vorgesehen ist, um die Ausgangssignale (102) der Neuronen (251) spektral zu kombinieren, und ein Spektralphasenanalysator (285) vorgesehen ist, um für die Bereitstellung der Ausgabe (210) eine Phase des kombinierten Ausgangssignals (102) auszuwerten, wobei der Spektralkombinierer (284) als optisches Gitter und/oder Prismensequenz und/oder dielektrische Schicht und/oder nichtlineares Medium und/oder Polarisationsoptik ausgebildet ist und wobei das System dazu ausgeführt ist, ein Verfahren nach den Ansprüchen 1 bis 8 auszuführen.

## Claims

1. Method for providing an artificial neural network (200), the following steps being performed:
- providing an optical signal (100) to the network (200) in order to obtain an output (210) of the network (200) by processing the optical signal (100) by means of the network (200),
- using a property of the optical signal (100) that is specific to a spectral and/or temporal phase of the optical signal (100) in order to provide at least one network component (250) of the network (200) for processing, the at least one network component (250) comprising at least one neuron (251) and/or one weight (252) of the network (200),
- providing multiple neurons (251) as the at least one network component (250),
**characterized by**
- using an optical spectral combiner (284) of the network (200) to combine the output signals of the neurons (251) obtained by using the property in a spectrally coherent or incoherent manner in order to perform the processing of multiple weights and/or neurons,
the spectral combiner (284) being designed as an optical grating and/or prism sequence and/or dielectric layer and/or nonlinear medium and/or polarization optics and the output signal of the spectral combiner (284) being present as a profile of the spectral phase as a function of the frequency of the neurons (251), which signal can be passed on to the next neuron (251).

2. Method according to claim 1,
**characterized in that**
the optical signal (100) is provided by transmitting a light signal into the network component (250), the light signal being a carrier of information which is processed by means of the processing of the network (200) in order to obtain, as the output (210), an evaluation, in particular classification, of the information.

3. Method according to claim 1 or 2,
**characterized in that**
the property specific to the phase of the optical signal (100) is used by changing a spectral phase profile of the optical signal (100) nonlinearly and linearly so as to change the property in order to execute a nonlinear function of the neuron (251) and a linear weighting of the weight (252).

4. Method according to any of the preceding claims,
**characterized in that**
the output (210) and/or an output signal (102) of the at least one network component (250) is evaluated by evaluating, in particular measuring, the property of the optical signal (100) specific to the phase of the optical signal (100).

5. Method according to any of the preceding claims,
**characterized in that**
the optical signal (100) is provided in the form of an optical input signal (101) which is specific to input information, and is processed by the at least one network component (250) in order to obtain an optical output signal (102) specific to the output (210).

6. Method according to any of the preceding claims,
**characterized in that**
multiple network components (250) are provided, which comprise neurons (251) and/or weights (252) which are provided together in different levels (290) of the network (200) and are optically connected to one another.

7. Method according to any of the preceding claims,
**characterized in that**
the property specific to the phase of the optical signal (100) is the spectral and/or temporal phase itself or a group delay or a group delay dispersion or a group velocity dispersion or a third-order or higher-order dispersion of the derivative of the spectral phase.

8. Method according to any of the preceding claims,
**characterized in that**
the network (200) is used in a vehicle (1), the optical signal (100) being provided in the form of an optical input signal (101) which is specific to input information regarding an environment (2) of the vehicle (1), and being processed by the at least one network component (250) in order to obtain the output (210) as a classification of the input information.

9. System for providing an artificial neural network (200), having:
- an interface (270) for providing an optical signal (100) to the network (200) in order to obtain an output (210) of the network (200) by processing the optical signal (100) by means of the network (200),
- at least one optical element (230) for using a property of the optical signal (100) that is specific to a spectral and/or temporal phase of the optical signal (100) in order to provide at least one network component (250) of the network (200) for processing, wherein the at least one network component (250) comprises at least one neuron (251) and/or one weight (252) of the network (200), wherein multiple optical elements (230) are provided and are each designed to change a spectral phase profile of the optical signal (100) at least nonlinearly for using the property in order to provide an output signal (102) of a neuron (251) of the network (200), wherein at least one spectral combiner (284) of the network (200) is provided to spectrally combine the output signals (102) of the neurons (251), and a spectral phase analyzer (285) is provided to evaluate a phase of the combined output signal (102) for providing the output (210),
wherein the spectral combiner (284) is designed as an optical grating and/or prism sequence and/or dielectric layer and/or nonlinear medium and/or polarization optics and wherein the system is designed to execute a method according to claims 1 to 8.

## Revendications

1. Procédé pour la fourniture d'un réseau neuronal artificiel (200), dans lequel les étapes suivantes sont effectuées :
- fourniture d'un signal optique (100) au réseau (200) afin d'obtenir une sortie (210) du réseau (200) par un traitement du signal optique (100) par le réseau (200),
- utilisation d'une propriété du signal optique (100), qui est spécifique à une phase spectrale et/ou temporelle du signal optique (100), afin de fournir, pour le traitement, au moins un composant (250) de réseau du réseau (200), dans lequel l'au moins un composant (250) de réseau comprend au moins un neurone (251) et/ou un poids (252) du réseau (200),
- fourniture de plusieurs neurones (251) en tant que l'au moins un composant (250) de réseau,
**caractérisé par**
- l'utilisation d'un combineur spectral (284) optique du réseau (200) pour combiner, de manière spectralement cohérente ou incohérente, les signaux de sortie des neurones (251) obtenus par l'utilisation de la propriété, afin d'effectuer le traitement de plusieurs poids et/ou neurones,
dans lequel le combineur spectral (284) est conçu en tant que réseau de diffraction optique et/ou séquence de prismes et/ou couche diélectrique et/ou milieu non linéaire et/ou optique de polarisation et le signal de sortie du combineur spectral (284) se présente en tant qu'évolution de la phase spectrale en fonction de la fréquence des neurones (251), laquelle peut être transmise au neurone (251) suivant.

2. Procédé selon la revendication 1,
**caractérisé en ce**
**que** la fourniture du signal optique (100) se produit par la transmission d'un signal lumineux vers le composant (250) de réseau, dans lequel le signal lumineux est un porteur d'une information qui est traitée par le traitement du réseau (200) afin d'obtenir, en tant que la sortie (210), une évaluation, notamment une classification, de l'information.

3. Procédé selon la revendication 1 ou 2,
**caractérisé en ce**
**que** l'utilisation de la propriété spécifique à la phase du signal optique (100) se produit en modifiant de manière non linéaire et linéaire une évolution de phase spectrale du signal optique (100) afin de modifier la propriété, afin de mettre en œuvre une fonction non linéaire du neurone (251) et une pondération linéaire du poids (252).

4. Procédé selon l'une des revendications précédentes,
**caractérisé en ce**
**que** la sortie (210) et/ou un signal de sortie (102) de l'au moins un composant (250) de réseau est évalué(e) en évaluant, notamment en mesurant, la propriété du signal optique (100) spécifique à la phase du signal optique (100).

5. Procédé selon l'une des revendications précédentes,
**caractérisé en ce**
**que** le signal optique (100) est fourni sous la forme d'un signal d'entrée (101) optique qui est spécifique à une information d'entrée, et qu'il est traité par l'au moins un composant (250) de réseau afin d'obtenir un signal de sortie (102) optique spécifique à la sortie (210).

6. Procédé selon l'une des revendications précédentes,
**caractérisé en ce**
**que** plusieurs composants (250) de réseau sont fournis, lesquels comprennent des neurones (251) et/ou des poids (252) qui sont prévus à différents niveaux (290) du réseau (200) les uns par rapport aux autres et qui sont reliés optiquement entre eux.

7. Procédé selon l'une des revendications précédentes,
**caractérisé en ce**
**que** la propriété spécifique à la phase du signal optique (100) est la phase spectrale et/ou temporelle elle-même ou un temps de propagation de groupe ou une dispersion de temps de propagation de groupe ou une dispersion de vitesse de groupe ou une dispersion de troisième ordre ou d'un ordre supérieur de la dérivée de la phase spectrale.

8. Procédé selon l'une des revendications précédentes,
**caractérisé en ce**
**que** le réseau (200) est utilisé dans un véhicule (1), dans lequel le signal optique (100) est fourni sous la forme d'un signal d'entrée (101) optique qui est spécifique à une information d'entrée relative à un environnement (2) du véhicule (1), et qui est traité par l'au moins un composant (250) de réseau afin d'obtenir la sortie (210) en tant qu'une classification de l'information d'entrée.

9. Système permettant de fournir un réseau neuronal artificiel (200), présentant :
- une interface (270) pour une fourniture d'un signal optique (100) au réseau (200) afin d'obtenir une sortie (210) du réseau (200) par un traitement du signal optique (100) par le réseau (200),
- au moins un élément optique (230) pour une utilisation d'une propriété du signal optique (100) qui est spécifique à une phase spectrale et/ou temporelle du signal optique (100), afin de fournir, pour le traitement, au moins un composant (250) de réseau du réseau (200), dans lequel l'au moins un composant (250) de réseau comprend au moins un neurone (251) et/ou un poids (252) du réseau (200), dans lequel plusieurs éléments optiques (230) sont prévus et sont respectivement mis en œuvre, pour l'utilisation de la propriété, pour modifier au moins de manière non linéaire une évolution de phase spectrale du signal optique (100), afin de fournir respectivement un signal de sortie (102) d'un neurone (251) du réseau (200), dans lequel au moins un combineur spectral (284) du réseau (200) est prévu pour combiner spectralement les signaux de sortie (102) des neurones (251), et un analyseur de phase spectrale (285) est prévu pour évaluer une phase du signal de sortie (102) combiné pour la fourniture de la sortie (210),
dans lequel le combineur spectral (284) est mis en œuvre en tant que réseau de diffraction optique et/ou séquence de prismes et/ou couche diélectrique et/ou milieu non linéaire et/ou optique de polarisation, et dans lequel le système est mis en œuvre pour mettre en œuvre un procédé selon les revendications 1 à 8.
